# EUROPEAN PATENT SPECIFICATION

(11) **EP 3 872 905 B1**
(45) Date of publication and mention of the grant of the patent: **18.10.2023**
(21) Application number: 19891034.1
(22) Date of filing: 20.11.2019
(51) Int. Cl.: H01M 4/62, H01M 10/42, H01M 4/13, H01M 10/052

(54) **CATHODE FOR LITHIUM SECONDARY BATTERY AND LITHIUM SECONDARY BATTERY INCLUDING SAME**
KATHODE FÜR EINE LITHIUMSEKUNDÄRBATTERIE UND LITHIUMSEKUNDÄRBATTERIE DAMIT
CATHODE POUR ACCUMULATEUR AU LITHIUM ET ACCUMULATEUR AU LITHIUM LA COMPRENANT

(30) Priority: 30.11.2018 KR 20180152272
(43) Date of publication of application: 01.09.2021
(73) Proprietor: LG Energy Solution, Ltd., Seoul 07335 (KR)
(72) Inventor: PARK, Jun Soo, Daejeon 34122 (KR); KIM, Kyung Min, Daejeon 34122 (KR); JUNG, Bum Young, Daejeon 34122 (KR)
(74) Representative: Hoffmann Eitle
(86) International application number: PCT/KR2019/015959
(87) International publication number: WO 2020/111649

(56) References cited:
- JP-B2- 6 092 263
- JP-B2- 6 262 834
- JP-B2- 6 271 506
- KR-A- 20160 133 242
- KR-A- 20170 139 761
- US-A1- 2016 020 467

## Description

### TECHNICAL FIELD

The present invention relates to a positive electrode for a lithium secondary battery and a lithium secondary battery including the positive electrode active material.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Recently, as lithium secondary batteries are used as power sources for medium and large sized devices such as electric vehicles, high capacity, high energy density, high output, and low cost of the lithium secondary batteries are more required.

One of the main research subjects of the lithium secondary batteries is to implement an electrode active material having high capacity and high output as well as to improve the stability of the battery using the electrode active material.

Currently, lithium secondary batteries are designed to be used in a specific voltage range (generally, 4.4 V or less) to ensure durability and stability. However, the cell potential may inadvertently rise above the range, and such sudden rise in the cell potential deintercalates lithium in the positive electrode material to produce more tetravalent Co, Ni ions, etc., and that causes side reactions such as gas generation or oxidization of an electrolyte solution, resulting in deterioration of cell performance.

In addition, when the overcharge state continues beyond the allowable current or voltage, the temperature inside the cell increases, and thus a separator is contracted to cause an internal short circuit. Due to the instantaneous overcurrent generated under the condition, the cell temperature increases rapidly, and that brings an issue of cell explosion with combustible gas inside the cell.

In the case of a conventional secondary battery, a flame retardant is used in the cell or a method of removing air in the cell is used to prevent cell ignition caused by overcharge.

Of these, when a flame retardant, particularly a melamine-based flame retardant having excellent flame retardant properties, is additionally included when overcharged, the adhesion of an electrode is deteriorated, and thus an electrode active material layer and a current collector layer are separated when the electrode is prepared.

Consequently, there is a demand for developing a battery having improved stability by quickly reaching overcharge termination voltage in the event of overcharging as well as preventing an increase in temperature inside the battery.

US 2016/020467 A1 describes a positive electrode for nonaqueous electrolyte secondary batteries. The positive electrode has a positive electrode mixture layer that comprises a first mixture layer of a positive electrode active material and a reaction inhibitor which inhibits a thermal reaction between the positive electrode active material and a nonaqueous electrolyte, and a second mixture layer of a positive electrode active material. The positive electrode is obtained by sequentially laminating the positive electrode current collector, the first and the second mixture layer in this order; and the concentration of the reaction inhibitor contained in the positive electrode mixture layer is high in the vicinity of the positive electrode current collector in comparison to that in the surface layer portion of the positive electrode mixture layer.

### DISCLOSURE OF THE INVENTION

### TECHNICAL PROBLEM

An aspect of the present invention provides a positive electrode having improved overcharging stability by swiftly blocking the charging current as well as preventing an increase in temperature inside the battery in the event of overcharging.

Another aspect of the present invention provides a lithium secondary battery including the positive electrode for a secondary battery.

### TECHNICAL SOLUTION

According to an aspect of the present invention, there is provided a positive electrode for a lithium secondary battery including a positive electrode active material layer formed on a surface of a positive electrode collector, wherein the positive electrode active material layer has a multilayer structure including a first positive electrode active material layer formed on the positive electrode collector and a second positive electrode active material layer formed on the first positive electrode active material layer, the first positive electrode active material layer includes a positive electrode active material, a first binder which is a melamine-based compound, and a second binder which is different from the melamine-based compound, and the second positive electrode active material layer includes a second positive electrode active material and the first binder which is a melamine-based compound.

According to another aspect of the present invention, there is provided a lithium secondary battery including the positive electrode for a secondary battery.

### ADVANTAGEOUS EFFECTS

A positive electrode according to the present invention may include a melamine-based compound in a specific amount as a binder to prevent an increase in temperature inside a battery through the melamine-based compound in the event of overcharging.

In addition, when the melamine-based compound is burned due to an increase in internal temperature, oligomers are generated, and when the oligomers are generated, the phase change occurs, and the consequent endothermic reaction may absorb combustion heat caused from overcharging. In addition, the amount of gas generated by a positive electrode active material is reduced due to the oligomers generated on the surface of the positive electrode active material, and accordingly fuel gas that can be burned during overcharging may be reduced to further improve the stability inside a cell.

In addition, the positive electrode according to the present invention includes a positive electrode active material layer having a two-layer structure, the first positive electrode active material layer relatively increases the content of a second binder, and the second positive electrode active material layer includes only a melamine-based compound as a binder to maximize the effects of improving the adhesion between a current collector and an active material layer and improving stability in the event of overcharging.

### BRIEF DESCRIPTION OF THE DRAWINGS

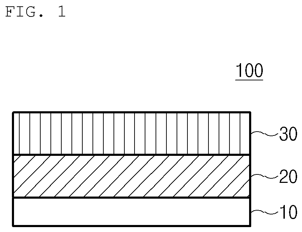

FIG. 1 is a schematic view illustrating a positive electrode according to the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Positive Electrode

A positive electrode for a secondary battery according to an embodiment of the present invention is a positive electrode including a positive electrode active material layer formed on a surface of a positive electrode collector, wherein the positive electrode active material layer has a multilayer structure including a first positive electrode active material layer formed on the positive electrode collector and a second positive electrode active material layer formed on the first positive electrode active material layer, the first positive electrode active material layer includes a positive electrode active material, a first binder which is a melamine-based compound, and a second binder which is different from the melamine-based compound, and the second positive electrode active material layer includes a second positive electrode active material and the first binder which is a melamine-based compound.

Hereinafter, a positive electrode for a secondary battery according to the present invention will be described in more detail.

First, the positive electrode includes a positive electrode active material layer having a multilayer structure formed on a positive electrode collector.

The positive electrode collector is not particularly limited as long as it has conductivity without causing chemical changes in a battery, and, for example, stainless steel, aluminum, nickel, titanium, fired carbon, or aluminum or stainless steel that is surface-treated with carbon, nickel, titanium, silver, etc. may be used. In addition, the positive electrode collector may typically have a thickness of 3 pm to 500 pm, and microscopic irregularities may be formed on the surface of the collector to improve the adhesion of the positive electrode active material. The positive electrode collector, for example, may be used in various forms such as a film, a sheet, a foil, a net, a porous body, a foam body, and a non-woven fabric body.

As shown in FIG. 1, the positive electrode active material layer according to the present invention has a multilayer structure, including a first positive electrode active material layer 20 formed on a positive electrode collector 10 and a second positive electrode active material layer 30 formed on the first positive electrode active material layer 30. The multilayer structure refers to a structure in which the first positive electrode active material layer and the second positive electrode active material layer are alternately stacked on the positive electrode collector.

For example, the present invention mixes and uses a first binder which is a melamine-based compound, and a second binder which is different from the melamine-based compound as a binder not only to improve the adhesion between the positive electrode collector and the positive electrode active material layer, but also to prevent an increase in temperature inside a battery in the event of overcharging. There was a limitation in that the adhesion between the positive electrode collector and the positive electrode active material layer decreases as the ratio of the melamine-based compound is increased to improve the stability of overcharging. On the contrary, when increasing the ratio of the second binder to improve the adhesion, there was a limitation in that the improvement effect in the stability of overcharging is insignificant. In addition, when increasing the total content of the binder, there was a limitation in that internal cell resistance increases or energy density decreases.

Therefore, according to the present inventors, while the first positive electrode active material layer has a multilayer structure, for example, a two-layer structure, the first positive electrode active material layer includes a first positive electrode active material, a first binder which is a melamine-based compound capable of improving stability when overcharged, and a second binder having excellent adhesive properties, and the second positive electrode active material layer includes a second positive electrode active material and only the first binder which is a melamine-based compound, to not only improve the adhesion between the positive electrode collector and the positive electrode active material layer without a decrease in energy density and an increase in internal resistance, but also improve the structural stability by preventing an increase in temperature in the battery in the event of overcharging. In addition, resistance properties can be further improved by preventing the migration of the binder than in the case of a single layer structure.

To be more specific, the first positive electrode active material layer according to the present invention may include a first positive electrode active material, a first binder which is a melamine-based compound, and a second binder which is different from the melamine-based compound.

The first positive electrode active material preferably includes at least any one transition metal among lithium, nickel, cobalt or manganese. For example, it may be lithium cobalt oxide (LiCoO₂); lithium nickel oxide (LiNiO₂); a layered compound or a compound substituted with one or more transition metals such as Li [NiₐCo_{b}Mn_{c}M¹_{d}]O₂ (wherein M¹ is any one selected from the group consisting of Al, Ga, and In or two or more elements thereof, and 0.3≤a<1.0, 0≤b≤0.5, 0≤c ≤0.5 , 0≤d≤0.1, a+b+c+d=l); Li (LiₑM²_{f-e-f'}M³_{f'})O_{2-g}A_{g} (wherein 0 ≤e≤0.2, 0.6≤f≤1, 0≤f'≤0.2, 0≤g≤0.2, M² includes Mn and at least one selected from the group consisting of Ni, Co, Fe, Cr, V, Cu, Zn, and Ti, M³ is at least one selected from the group consisting of Al, Mg, and B, A is at least one selected from the group consisting of P, F , S, and N) ; lithium manganese oxides such as Li₁₊ₕMn₂₋ₕO₄ (wherein 0≤h≤0.33), LiMnO₃, LiMn₂O₃, and LiMn02; Ni-site-type lithium nickel oxide represented by the formula LiNi₁₋ᵢM⁴ᵢO₂ (wherein M⁴ = Co, Mn, Al, Cu, Fe, Mg, B or Ga, 0.01≤i≤0.3); lithium manganese composite oxides represented by the formula LiMn₂₋ⱼM⁵ⱼO₂ (wherein M⁵ = Co, Ni, Fe, Cr, Zn or Ta, 0.01≤j≤0.1) or Li₂Mn₃M⁶O₈ (wherein M⁶ = Fe, Co, Ni, Cu, or Zn) ; or LiMn₂O₄ in which a part of Li in the formula is substituted with an alkaline earth metal ion. Preferably, the first positive electrode active material may be a lithium nickel cobalt manganese composite oxide including nickel, cobalt, and manganese as a transition metal.

The first binder, which is a melamine-based compound, may include at least any one of melamine or melamine derivatives, and may preferably include melamine acid salts.

The melamine-based compound may prevent an increase in temperature inside a secondary battery when overcharged. For example, when the secondary battery is overcharged, the temperature of the melamine-based compound also gradually increases as the temperature of the battery increases, and in this case, combustion of the melamine-based compound occurs. The melamine-based compound may form an oligomer while being burned, even when the temperature of the battery increases due to overcharging, the endothermic reaction brought during the generation of the oligomer formed on the surface of the positive electrode active material reduces the heat transferred to the positive electrode active material, thereby reducing the combustibles to improve stability.

In addition, when the melamine-based compound is burned, the surface of the positive electrode active material may be formed as a non-porous surface. The non-porous surface may block heat and/or oxygen generated on the surface of the positive electrode active material and transferred to the positive electrode active material by a short-circuit current inside the battery, and thus, flame retardant properties may be further improved.

In addition, the second binder which is different from the melamine-based compound serves to improve adhesion between the positive electrode active material particles and the adhesion between the positive electrode active material and the current collector, for example, the second binder may be at least one selected from the group consisting of polyamide-imide (PAI) and polyvinylidene fluoride (PVDF). Preferably, when the polyamide-imide having excellent adhesion properties is used as the second binder, the adhesion between the positive electrode collector and the second positive electrode active material layer may be further improved due to high adhesive properties.

The first positive electrode active material layer may include 1 to 30 parts by weight, preferably 1.5 to 10 parts by weight, of a first binder which is a melamine-based compound and a second binder which is different from the melamine-based compound, with respect to 100 parts by weight of the first positive electrode active material.

When the first positive electrode active material layer includes the first binder and the second binder in the above range with respect to 100 parts by weight of the first positive electrode active material, the energy density is excellent, and the adhesion between the positive electrode collector and the second positive electrode active material layer may be improved. For example, when the content of the first binder and the second binder is lower than the above range, the adhesion between the positive electrode collector and the positive electrode active material layer is low, so that when a battery is manufactured using the same, the positive electrode collector and the positive electrode active material layer may be separated due to the charge and discharge of the battery.

The first positive electrode active material layer may include a first binder which is a melamine-based compound and a second binder in a weight ratio of 0.5:1 to 10:1, more preferably 0.5:1 to 5:1, most preferably 0.5:1 to 2.5:1. For example, when the first positive electrode active material layer includes the first binder and the second binder in the above range, while improving the adhesion between the positive electrode collector and the positive electrode active material layer, properties of preventing an increase in temperature inside a cell due to the inclusion of the melamine-based compound can be realized.

For example, when the first positive electrode active material layer includes the second binder in an amount outside the range, so that the amount of the second binder is below the range, the adhesion may be reduced, and when the amount of the second binder is above the range, the endothermic reaction of melamine may be deteriorated.

Meanwhile, the second positive electrode active material layer may be disposed on the first positive electrode active material layer, and may include a second positive electrode active material and a first binder which is a melamine-based compound.

The second positive electrode active material preferably includes at least any one transition metal among lithium, nickel, cobalt or manganese. For example, it may be lithium cobalt oxide (LiCoO₂); lithium nickel oxide (LiNiO₂); a layered compound or a compound substituted with one or more transition metals such as Li[NiₐCo_{b}Mn_{c}M¹_{d}]O₂ (wherein M¹ is any one selected from the group consisting of Al, Ga, and In or two or more elements thereof, and 0.3≤a<1.0, 0≤b≤0.5, 0≤c ≤0.5 , 0≤d≤0.1, a+b+c+d=1); Li(LiₑM²_{f-e-f'}M³_{f'}) O_{2-g}A_{g} (wherein 0 ≤e≤0.2, 0.6≤f≤1, 0≤f'≤0.2, 0≤g≤0.2, M² includes Mn and at least one selected from the group consisting of Ni, Co, Fe, Cr, V, Cu, Zn, and Ti, M³ is at least one selected from the group consisting of Al, Mg, and B, A is at least one selected from the group consisting of P, F , S, and N) ; lithium manganese oxides such as Li₁₊ₕMn₂₋ₕO₄ (wherein 0≤h≤0.33), LiMnO₃, LiMn₂O₃, and LiMn02; Ni-site-type lithium nickel oxide represented by the formula LiNi₁₋ᵢM⁴ᵢO₂ (wherein M⁴ = Co, Mn, Al, Cu, Fe, Mg, B or Ga, 0.01≤i≤0.3); lithium manganese composite oxides represented by the formula LiMn₂₋ⱼM⁵ⱼO₂ (wherein M⁵ = Co, Ni, Fe, Cr, Zn or Ta, 0.01≤j≤0.1) or Li₂Mn₃M6O₈ (wherein M⁶ = Fe, Co, Ni, Cu, or Zn); or LiMn₂O₄ in which a part of Li in the formula is substituted with an alkaline earth metal ion. Preferably, the first positive electrode active material may be a lithium nickel cobalt manganese composite oxide including nickel, cobalt, and manganese as a transition metal.

In this case, the first positive electrode active material included in the first positive electrode active material layer and the second positive electrode active material included in the second positive electrode active material layer may be the same or different, and may be appropriately used as necessary.

The second positive electrode active material layer may include 1 to 30 parts by weight, preferably 1.5 to 10 parts by weight of the first binder, which is a melamine-based compound, with respect to 100 parts by weight of the second positive electrode active material. The second positive electrode active material layer may include only a melamine-based compound as a binder to include a higher weight of the melamine-based compound than when using a single active material layer.

The first positive electrode active material layer and the second positive electrode active material layer may have a thickness ratio of 5:95 to 50:50, preferably 20:80 to 50:50, and most preferably 40:60 to 50:50. When the first positive electrode active material layer and the second positive electrode active material layer are formed in the above ranges, the first positive electrode active material layer is formed to a minimum thickness to have adhesion strong enough to produce an electrode, and then the second positive electrode active material layer is formed to achieve both improved adhesion and stability in the event of overcharging.

That is, according to the present invention, while including a melamine-based compound to improve the stability of a secondary battery when overcharged, the positive electrode active material layer is formed to have a two-layer structure to overcome the conventional limitation in the deterioration of adhesion due to an amount increase of the melamine-based compound, thereby providing a positive electrode for a secondary battery capable of improving both adhesion and stability.

The first positive electrode active material layer and/or the second positive electrode active material layer may optionally further include a conductive agent as necessary. The conductive agent is used to provide conductivity to an electrode, wherein any conductive agent may be used without particular limitation as long as it has suitable electron conductivity without causing chemical changes in a battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide and potassium titanate; conductive metal oxides such as titanium oxide; or conductive polymers such as polyphenylene derivatives, and any one thereof or a mixture of two or more thereof may be used. The conductive agent may be included in an amount of 0.1 to 10 parts by weight with respect to the total 100 parts by weight of the positive electrode active material.

The positive electrode may be manufactured according to a conventional method for manufacturing a positive electrode. Specifically, a positive electrode active material, a first binder which is a melamine-based compound, and a second binder which is different from the melamine-based compound are dissolved or dispersed in a solvent to prepare a first positive electrode active material layer-forming composition, then the composition is applied onto a positive electrode collector, dried and rolled to form a first positive electrode active material layer, thereafter, a positive electrode active material and a melamine-based compound are dissolved or dispersed in a solvent to prepare a second positive electrode active material layer-forming composition, then the composition is applied onto the first positive electrode active material layer, dried and rolled to produce a positive electrode including the positive electrode active material layer having a two-layer structure formed on the positive electrode collector.

The solvent may be a solvent generally used in the art and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

In addition, an electrochemical device including the positive electrode may be prepared in the present invention. The electrochemical device may specifically be a battery or a capacitor, and, more specifically, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing chemical changes in a battery, and, for example, copper, stainless steel, aluminum, nickel, titanium, fired carbon, copper or stainless steel that is surface-treated with carbon, nickel, titanium, silver, etc., and an aluminum-cadmium alloy may be used. Also, the negative electrode collector may typically have a thickness of 3 um to 500 pm, and, similar to the positive electrode collector, microscopic irregularities may be formed on the surface of the collector to improve the adhesion of a negative electrode active material. The negative electrode collector, for example, may be used in various forms such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound that can be alloyed with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOp (0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and hightemperature sintered carbon such as petroleum or coal tar pitch derived cokes.

The negative electrode active material may be included in an amount of 80 to 99 parts by weight with respect to the total weight of the negative electrode active material layer.

The binder is a component that assists in the binding between the conductive agent, the active material, and the current collector, wherein the binder is typically added in an amount of 0.1 to 10 parts by weight with respect to the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrilebutadiene rubber, a fluoro rubber, various copolymers thereof, etc.

The conductive agent is a component for further improving conductivity of the negative electrode active material, wherein the conductive agent may be added in an amount of 10 parts by weight or less, for example, 5 parts by weight or less with respect to the total weight of the negative electrode active material layer. The conductive agent is not particularly limited as long as it has conductivity without causing chemical changes in a battery, and, for example, graphite such as natural graphite or artificial graphite; carbon black such as acetylene black, Ketjen black, channel black, furnace black, lamp black, or thermal black; conductive fibers such as carbon fibers or metal fibers; metal powder such as fluorocarbon powder, aluminum powder, or nickel powder; conductive whiskers such as zinc oxide or potassium titanate; conductive metal oxide such as titanium oxide; or polyphenylene derivatives may be used.

For example, the negative electrode active material layer may be prepared by coating a composition for forming a negative electrode, which is prepared by dissolving or dispersing selectively the binder and the conductive agent as well as the negative electrode active material in a solvent, on the negative electrode collector and drying the coated negative electrode collector, or may be prepared by casting the composition for forming a negative electrode on a separate support and then laminating a film separated from the support on the negative electrode collector.

Meanwhile, in the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefinbased polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an etherbased solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, Lil, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 to 5 parts by weight with respect to the total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### Examples

### Example 1

LiNi_{0.6}Co_{0.2}Mn_{0.2}O₂ positive electrode active material, carbon black (super-C65) as a conductive agent, polyamide-imide (PAI) as a binder, and melamine cyanurate (MC) as a binder were mixed in an N-methylpyrrolidone (NMP) solvent so as to have a weight ratio of 90:5:2.5:2.5 to prepare a first positive electrode active material slurry.

Separately, LiNi_{0.6}Co_{0.2}Mn_{0.2}O₂ positive electrode active material, carbon black (super-C65) as a conductive agent, and melamine cyanurate (MC) were mixed in an NMP solvent so as to have a weight ratio of 90:5:5 to prepare a second positive electrode active material slurry.

The first positive electrode active material slurry prepared above was applied onto an aluminum foil having a thickness of 15 pm, heat treated at 130 °C for 1 hour, and rolled to form a first positive electrode active material layer having a thickness of 60 um. Subsequently, the second positive electrode active material slurry was applied onto the first positive electrode active material layer, heat treated at 130 °C for 1 hour, and rolled to form a second positive electrode active material layer having a thickness of 60 pm, which was used as a positive electrode for a secondary battery.

### Example 2

LiNi_{0.6}Co_{0.2}Mn_{0.2}O₂ positive electrode active material, super-C65 as a conductive agent, PAI as a binder, and melamine cyanurate (MC) as a binder were mixed in an NMP solvent so as to have a weight ratio of 90:5:1.5:3.5 to prepare a first positive electrode active material slurry.

Separately, LiNi_{0.6}Co_{0.2}Mn_{0.2}O₂ positive electrode active material, super-C65 as a conductive agent, and melamine cyanurate (MC) were mixed in an NMP solvent so as to have a weight ratio of 90:5:5 to prepare a second positive electrode active material slurry.

A positive electrode including a two-layered positive electrode active material layer was manufactured in the same manner as in Example 1, except that the first positive electrode active material slurry and the second positive electrode active material slurry prepared above were used.

### Comparative Example 1

The first positive electrode active material slurry prepared in Example 1 was applied onto Al foil, heat treated at 130 °C for 1 hour, and rolled to form a positive electrode active material layer having a thickness of 120 pm, which was used as a positive electrode for a secondary battery.

### Comparative Example 2

The second positive electrode active material slurry prepared in Example 1 was applied onto Al foil, heat treated at 130 °C for 1 hour, and rolled to form a positive electrode active material layer having a thickness of 120 pm, which was used as a positive electrode for a secondary battery.

### Experimental Example 1: Overcharge Experiment

A secondary battery was manufactured using the positive electrodes prepared in Examples 1 and 2 and Comparative Examples 1 and 2.

Artificial graphite as a negative electrode active material, carbon black (super-C65) as a conductive agent, and a styrene butadiene rubber (SBR) binder were mixed in a distilled water solvent in a weight ratio of 90:5:5 to prepare a negative electrode slurry. The negative electrode slurry was applied onto a copper foil having a thickness of 10 um to a thickness of 150 pm, dried, and then roll-pressed to prepare a negative electrode.

The positive electrodes prepared in Examples 1 and 2 and Comparative Examples 1 and 2, and the negative electrode prepared above together with a polyethylene separator (celgard) having a thickness of 20 um were stacked to prepare an electrode assembly, the electrode assembly was put into a battery case, and then an electrolyte in which 1M LiPF₆ was dissolved in an organic solvent, where ethylene carbonate, dimethyl carbonate, and diethyl carbonate were mixed at a volume ratio of 1:2:1, was injected to prepare a lithium secondary battery.

The overcharge experiment was performed using the secondary batteries of Examples 1 and 2 and Comparative Examples 1 and 2. Specifically, charging was performed with 0.05C cut off to a full voltage (4.2 V) at 0.3C, and then an 1 hour rest period was given to stabilize the voltage. After stabilizing the cell voltage, overcharge was performed at 1C and 8V, the overcharge experiments of the secondary batteries of Examples 1 and 2 and Comparative Examples 1 and 2 were performed five times in total, and the results are shown in Table 1 below.

**[Table 1]**

| | Maximum temperature of unignited sample (°C) | No. of ignition (5 in total) |
|---|---|---|
| Example 1 | 172 | 2 |
| Example 2 | 121 | 0 |
| Comparative Example 1 | - | 5 |
| Comparative Example 2 | Difficulties in manufacturing a secondary battery due to the deterioration of adhesion | |

As shown in Table 1, in terms of the secondary battery including the positive electrode active materials prepared in Examples 1 and 2, it was confirmed that the ignition rate was less than half out of five samples.

Meanwhile, in terms of the secondary battery including the positive electrode active material prepared in Comparative Example 1, it was confirmed that the ignition occurred when overcharged as the amount of the melamine-based compound that serves as a flame retardant in the electrode is included below the range of the present invention.

In addition, in terms of the secondary battery including the positive electrode active material prepared in Comparative Example 2, since only the melamine-based compound was included as a binder, it was difficult to manufacture a secondary battery due to the deterioration of adhesion between the electrode layer and the current collector layer.

## Claims

1. A positive electrode for a secondary battery, the positive electrode comprising a positive electrode active material layer formed on a surface of a positive electrode collector,
wherein the positive electrode active material layer has a multilayer structure including a first positive electrode active material layer formed on the positive electrode collector and a second positive electrode active material layer formed on the first positive electrode active material layer,
the first positive electrode active material layer comprises a first positive electrode active material, a first binder which is a melamine-based compound, and a second binder which is different from the melamine-based compound, and
the second positive electrode active material layer comprises a second positive electrode active material and the first binder which is a melamine-based compound.

2. The positive electrode for a secondary battery of claim 1, wherein the melamine-based compound is a melamine acid salt.

3. The positive electrode for a secondary battery of claim 2, wherein the melamine acid salt comprises melamine cyanurate.

4. The positive electrode for a secondary battery of claim 1, wherein the first positive electrode active material layer comprises 1 to 30 parts by weight of the first binder which is a melamine-based compound and the second binder which is different from the melamine-based compound, with respect to 100 parts by weight of the first positive electrode active material.

5. The positive electrode for a secondary battery of claim 1, wherein the first positive electrode active material layer comprises the first binder which is a melamine-based compound and the second binder which is different from the melamine-based compound in a weight ratio of 0.5:1 to 10:1.

6. The positive electrode for a secondary battery of claim 1, wherein the second binder comprises at least any one selected from the group consisting of polyamide-imide and polyvinylidene fluoride.

7. The positive electrode for a secondary battery of claim 1, wherein the second positive electrode active material layer comprises 1 to 30 parts by weight of the first binder with respect to 100 parts by weight of the second positive electrode active material.

8. The positive electrode for a secondary battery of claim 1, wherein the first positive electrode active material layer and the second positive electrode active material layer have a thickness ratio of 5:95 to 50:50.

9. A lithium secondary battery comprising the positive electrode according to claim 1.

## Patentansprüche

1. Positive Elektrode für eine Sekundärbatterie, wobei die positive Elektrode eine Positivelektrodenaktivmaterialschicht, die auf einer Oberfläche eines Positivelektrodenstromabnehmers ausgebildet ist, umfasst,
wobei die Positivelektrodenaktivmaterialschicht eine Mehrschichtstruktur aufweist, welche eine erste Positivelektrodenaktivmaterialschicht, die auf dem Positivelektrodenstromabnehmer ausgebildet ist, und eine zweite Positivelektrodenaktivmaterialschicht, die auf der ersten Positivelektrodenaktivmaterialschicht ausgebildet ist, einschließt,
die erste Positivelektrodenaktivmaterialschicht ein erstes Positivelektrodenaktivmaterial, ein erstes Bindemittel, das eine Verbindung auf Melaminbasis ist, und ein zweites Bindemittel, das sich von der Verbindung auf Melaminbasis unterscheidet, umfasst, und
die zweite Positivelektrodenaktivmaterialschicht ein zweites Positivelektrodenaktivmaterial und das erste Bindemittel, das eine Verbindung auf Melaminbasis ist, umfasst.

2. Positive Elektrode für eine Sekundärbatterie nach Anspruch 1, wobei die Verbindung auf Melaminbasis ein Melaminsäuresalz ist.

3. Positive Elektrode für eine Sekundärbatterie nach Anspruch 2, wobei das Melaminsäuresalz Melamincyanurat umfasst.

4. Positive Elektrode für eine Sekundärbatterie nach Anspruch 1, wobei die erste Positivelektrodenaktivmaterialschicht 1 bis 30 Gewichtsteile des ersten Bindemittels, das eine Verbindung auf Melaminbasis ist, und des zweiten Bindemittels, das sich von der Verbindung auf Melaminbasis unterscheidet, bezogen auf 100 Gewichtsteile des ersten Positivelektrodenaktivmaterials, umfasst.

5. Positive Elektrode für eine Sekundärbatterie nach Anspruch 1, wobei die erste Positivelektrodenaktivmaterialschicht das erste Bindemittel, das eine Verbindung auf Melaminbasis ist, und das zweite Bindemittel, das sich von der Verbindung auf Melaminbasis unterscheidet, in einem Gewichtsverhältnis von 0,5:1 bis 10:1 umfasst.

6. Positive Elektrode für eine Sekundärbatterie nach Anspruch 1, wobei das zweite Bindemittel mindestens eines umfasst, ausgewählt aus der Gruppe bestehend aus Polyamidimid und Polyvinylidenfluorid.

7. Positive Elektrode für eine Sekundärbatterie nach Anspruch 1, wobei die zweite Positivelektrodenaktivmaterialschicht 1 bis 30 Gewichtsteile des ersten Bindemittels in Bezug auf 100 Gewichtsteile des zweiten Positivelektrodenaktivmaterials umfasst.

8. Positive Elektrode für eine Sekundärbatterie nach Anspruch 1, wobei die erste Positivelektrodenaktivmaterialschicht und die zweite Positivelektrodenaktivmaterialschicht ein Dickenverhältnis von 5:95 bis 50:50 aufweisen.

9. Lithium-Sekundärbatterie, umfassend die positive Elektrode nach Anspruch 1.

## Revendications

1. Électrode positive pour un accumulateur, l'électrode positive comprenant une couche de matériau actif d'électrode positive formée sur une surface d'un collecteur d'électrode positive,
dans laquelle la couche de matériau actif d'électrode positive a une structure multicouche comportant une première couche de matériau actif d'électrode positive formée sur le collecteur d'électrode positive et une seconde couche de matériau actif d'électrode positive formée sur la première couche de matériau actif d'électrode positive,
la première couche de matériau actif d'électrode positive comprend un premier matériau actif d'électrode positive, un premier liant qui est un composé à base de mélamine, et un second liant qui est différent du composé à base de mélamine, et
la seconde couche de matériau actif d'électrode positive comprend un second matériau actif d'électrode positive et le premier liant qui est un composé à base de mélamine.

2. Électrode positive pour un accumulateur selon la revendication 1, dans laquelle le composé à base de mélamine est un sel d'acide de mélamine.

3. Électrode positive pour un accumulateur selon la revendication 2, dans laquelle le sel d'acide de mélamine comprend du cyanurate de mélamine.

4. Électrode positive pour un accumulateur selon la revendication 1, dans laquelle la première couche de matériau actif d'électrode positive comprend 1 à 30 parties en poids du premier liant qui est un composé à base de mélamine et du second liant qui est différent du composé à base de mélamine, par rapport à 100 parties en poids du premier matériau actif d'électrode positive.

5. Électrode positive pour un accumulateur selon la revendication 1, dans laquelle la première couche de matériau actif d'électrode positive comprend le premier liant qui est un composé à base de mélamine et le second liant qui est différent du composé à base de mélamine dans un rapport pondéral de 0,5:1 à 10:1.

6. Électrode positive pour un accumulateur selon la revendication 1, dans laquelle le second liant comprend au moins l'un quelconque choisi dans le groupe constitué de polyamide-imide et de fluorure de polyvinylidène.

7. Électrode positive pour un accumulateur selon la revendication 1, dans laquelle la seconde couche de matériau actif d'électrode positive comprend 1 à 30 parties en poids du premier liant par rapport à 100 parties en poids du second matériau actif d'électrode positive.

8. Électrode positive pour un accumulateur selon la revendication 1, dans laquelle la première couche de matériau actif d'électrode positive et la seconde couche de matériau actif d'électrode positive ont un rapport d'épaisseur de 5:95 à 50:50.

9. Accumulateur au lithium comprenant l'électrode positive selon la revendication 1.
